# EUROPEAN PATENT APPLICATION

(11) **EP 2 584 428 A2**
(43) Date of publication of application: **24.04.2013**
(21) Application number: 12189321.8
(22) Date of filing: 19.10.2012
(51) Int. Cl.: G06F 1/16, H04L 12/00

(54) **Portable terminal and method of sharing a component thereof**

(30) Priority: 21.10.2011 KR 20110108027
(71) Applicant: Samsung Electronics Co., Ltd, Gyeonggi-do 443-742 (KR)
(72) Inventor: Lee, Kanghwan, Gyeonggi-do 443-742 (KR)
(74) Representative: de Baat, Michiel Anton

(57) **Abstract**

A portable terminal capable of sharing at least a portion of a component, and a method therefor, are provided. The portable terminal includes an interface unit configured to connect with another portable terminal and a controller configured to activate a sharing mode in which at least a portion of a component is shared with the other portable terminal when connected with the other portable terminal through the interface unit.

## Description

The present invention relates to a portable terminal. More particularly, the present invention relates to a portable terminal capable of sharing at least a portion of a component thereof and a method therefor.

The use and distribution of a portable terminal has rapidly increased due to advancements made in communication and semiconductor technologies. More particularly, a recently developed portable terminal has an advanced multimedia function such as, for example, reproducing video or playing a game. As the multimedia function of the portable terminal has advanced, a size of a display of the portable terminal has increased. However, the portable terminal has a limitation to increasing the size of the display due to its portability. Accordingly, a portable terminal of the related art has a function to connect with another display device. However, this connection function merely provides a simple function of transmitting a screen of the portable terminal to the other display device. Also, this connection function is inconvenient in that a user needs to carry the other display device which is typically larger than the portable terminal or the user needs to move to a location where the other display is located.

Accordingly, there exists a need for a solution to enlarge a display by sharing a display device with another portable terminal having a similar form factor. Additionally, a portable terminal increasingly tends to have a similar form factor, and thus, there exists a need for a solution to connect portable terminals to share at least a portion of a component thereof.

Aspects of the present invention are to address at least the above-mentioned problems and/or disadvantages and to provide at least the advantages described below. Accordingly, an aspect of the present invention is to provide a portable terminal capable of sharing at least a portion of a component with another portable terminal having a similar form factor and a method therefor.

In accordance with an aspect of the present invention, a portable terminal is provided. The portable terminal includes an interface unit configured to connect with another portable terminal, and a controller configured to activate a sharing mode in which at least a portion of a component is shared with the other portable terminal when connected with the other portable terminal through the interface unit.

In accordance with another aspect of the present invention, a method of sharing a component of a portable terminal is provided. The method includes detecting, by the portable terminal, a connection with another portable terminal and activating a sharing mode in which at least a portion of a component is shared with the other portable terminal when connection with the other portable terminal is detected.

In accordance with yet another aspect of the present invention, a method of sharing a component of a portable terminal is provided. The method includes connecting the portable terminal with another portable terminal through a short range wireless communication, determining whether execution of a sharing mode in which the portable terminal and the other portable terminal share at least a portion of a component is requested, and executing the sharing mode when the execution of the sharing mode is requested. The method according to this aspect can comprise any of the features disclosed herein.

According to yet another aspect a computer program is provided, the computer program comprising instructions to be executed by a computer processor (in either the portable terminal or the other portable terminal), the instructions allowing the execution of the method according to any of the aspects, the computer program saved on or in an information carrier. Other aspects, advantages, and salient features of the invention will become apparent to those skilled in the art from the following detailed description, which, taken in conjunction with the annexed drawings, discloses exemplary embodiments of the invention.

The above and other aspects, features and advantages of certain exemplary embodiments of the present invention will be more apparent from the following description taken in conjunction with the accompanying drawings, in which:
FIG. 1 is a schematic view illustrating a portable terminal according to an exemplary embodiment of the present invention;
FIG. 2 is a view illustrating an enlargement of a display by connecting two portable terminals according to an exemplary embodiment of the present invention;
FIG. 3 is a schematic view illustrating a configuration of a portable terminal according to an exemplary embodiment of the present invention;
FIG. 4 is a flowchart illustrating a method of sharing a component of a portable terminal according to an exemplary embodiment of the present invention;
FIG. 5 is a view illustrating an example of reproducing a video by enlarging a display according to an exemplary embodiment of the present invention; and
FIG. 6 is a view illustrating an example of playing a game by enlarging a display according to an exemplary embodiment of the present invention.

Throughout the drawings, it should be noted that like reference numbers are used to depict the same or similar elements, features, and structures.

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

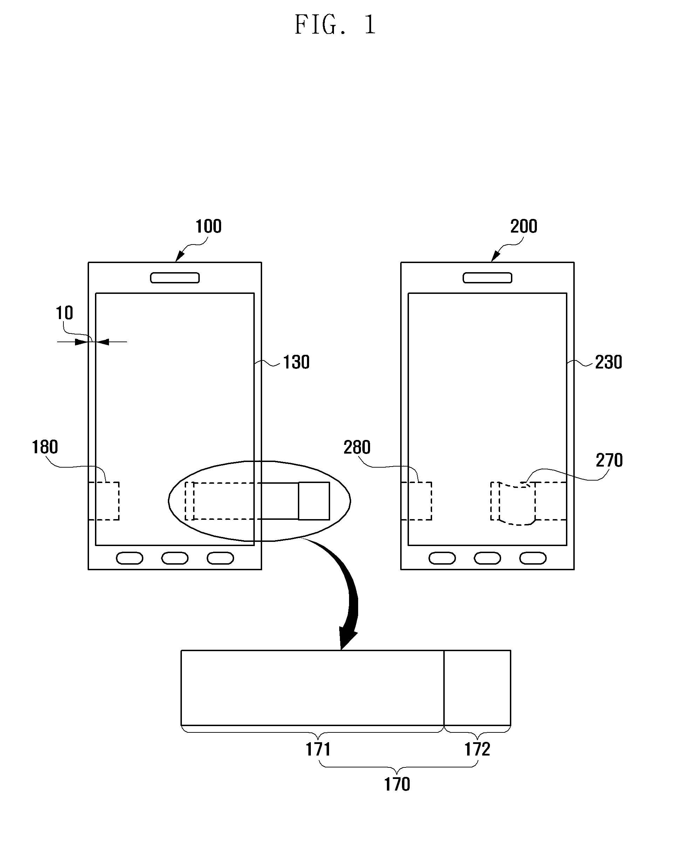

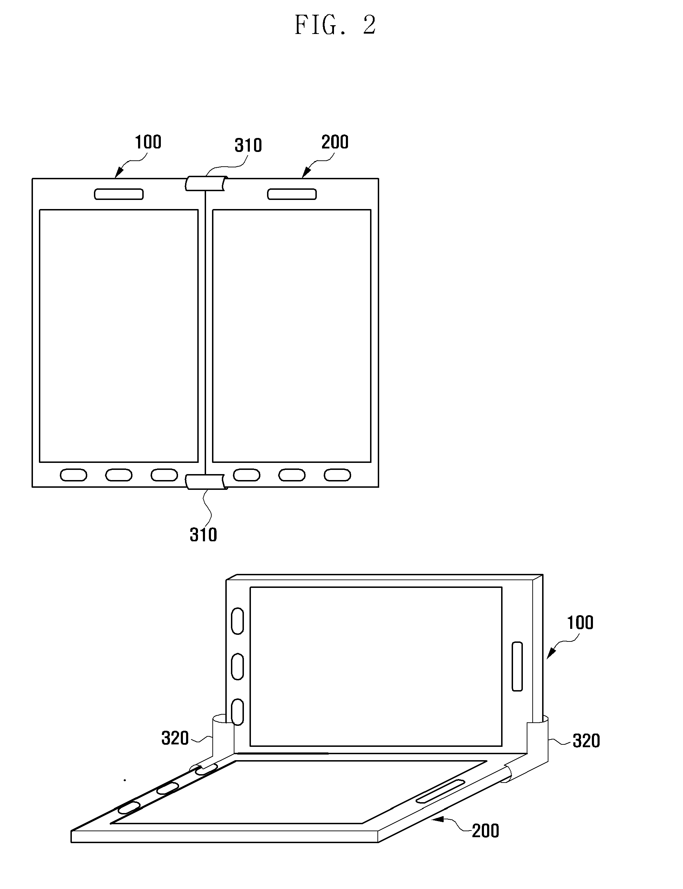

FIG. 1 is a schematic view illustrating an exterior appearance of a portable terminal according to an exemplary embodiment of the present invention. FIG. 2 is a view illustrating an enlargement of a display by connecting two portable terminals according to an exemplary embodiment of the present invention.

Referring to FIGs. 1 and 2, a first portable terminal 100 and a second portable terminal 200 according to an exemplary embodiment of the present invention may have a similar form factor. In other words, the first portable terminal 100 and the second portable terminal 200 may have a similar hardware specification. The first portable terminal 100 and the second portable terminal 200 may be a full touch portable terminal. However, the present invention is not limited thereto. For example, exemplary embodiments of the present invention may apply to a portable terminal that is, for example, of a slide type, a folder type or a bar type. More particularly, the first portable terminal 100 and the second portable terminal 200 according to the present exemplary embodiment may include a first interface unit 170, 270 and a second interface unit 180, 280 for establishing a communication channel. For example, the first interface unit 170 of the first portable terminal 100 may be inserted into the second interface unit 280 of the second portable terminal 200 to connect the first portable terminal 100 and the second portable terminal 200. The first interface unit 170, 270 may be formed in a Flexible Printed Circuit Board (FPCB).

The first interface unit 170, 270 may be positioned inside the portable terminal 100, 200 in a normal state (i.e., a state where the first portable terminal 100 is not to be connected to the second portable terminal 200) and may be exposed when connected with the second portable terminal 200. The first interface unit 170, 270 may include a connection unit 171 including a plurality of signal lines and an insertion unit 172 to be connected to the second interface unit 180, 280. Here, the connection unit 171 may be formed using a flexible material and a mounting unit 172 may be formed using a solid material. The first interface unit 170, 270 may be formed as part of the flexible printed circuit board (not shown) so as to form one body. Alternatively, the first interface unit 170, 270 may be formed separately from the flexible printed circuit board (not shown).

When the first portable terminal 100 and the second portable terminal 200 are connected to each other through the first interface unit 170 and the second interface unit 280, the first portable terminal 100 and the second portable terminal 200 according to the present exemplary embodiment may operate in a sharing mode. The sharing mode refers to a mode in which at least a portion of a component is shared. The component is a component which is respectively included in a portable terminal and another portable terminal to perform the same function. Here, the component may have the same or a similar specification. For example, the component may include a display (e.g., a touch screen), a battery, a camera module, and a sensor module. Namely, in the present exemplary embodiment, in the sharing mode, a plurality of displays (e.g., touch screen 130, 230) may be shared to be collectively used as one display. Here, the first portable terminal 100 and the second portable terminal 200 may also share the battery. To this end, the first interface unit 170, 270 and the second interface unit 180, 280 may include a data line for transmitting at least an image data and a battery line for sharing the battery.

As described above, in order to collectively use a plurality of displays as one display, the first portable terminal 100 and the second portable terminal 200 preferably have a minimized BM (Black Mark) area 10. The purpose of this is to minimize an interval between the touch screens 130, 230 when the first portable terminal 100 and the second portable terminal 200 are connected to each other, as shown in FIG. 2.

Meanwhile, the present exemplary embodiment may provide clips 310, 320 for fixing the first portable terminal 100 and the second portable terminal 200. As shown in FIG. 2, the clips 310, 320 may include a straight type clip 310 and a bent type clip 320 that is bent at a predetermined angle. Further, the angle at which the clips are bent may be adjustable. The clips 310, 320 are forcefully fit to a body of the first portable terminal 100 and a body of the second portable terminal 200 so that the first portable terminal 100 and the second portable terminal 200 may not be moved. For example, the straight type clip 310 may fix the first portable terminal 100 and the second portable terminal 200 in a straight line. The straight type clip 310 may be used for reproducing video. The bent type clip 320 may fix the first portable terminal 100 and the second portable terminal 200 such that the first portable terminal 100 and the second portable terminal 200 have a predetermined angle therebetween. The bent type clip 320 may be used in a case where a screen is divided into a manipulation screen and an execution screen such as when executing a game or writing a document in the sharing mode. The clips 310, 320 may be provided as an accessory. Meanwhile, the clips according to an exemplary embodiment of the present invention are not limited to the structure shown in FIG. 2. Also, the present invention is not limited to fixing the first portable terminal 100 and the second portable terminal 200 by using the clip. For example, in an alternative exemplary embodiment, the first portable terminal 100 and the second portable terminal 200 may be fixed by using a holding stack. Also, the first portable terminal 100 and the second portable terminal 200 may further include a coupling unit (not shown) for fixing each other. This will be described in more detail further below. The coupling unit (not shown) may have a male-female structure and the first portable terminal 100 and the second portable terminal 200 may be fixed by coupling between a female coupling unit of the first portable terminal 100 and a male coupling unit of the second portable terminal 200, or to the contrary, may be fixed by coupling between a female coupling unit of the second portable terminal 200 and a male coupling unit of the first portable terminal 100.

It is described above that the first interface units 170, 270 and the second interface units 180, 280 include the data line for transmitting the image data and the battery line for sharing the battery; however, the present invention is not limited thereto. For example, the first interface units 170, 270 and the second interface units 180, 280 may further include, for example, a detection line for detecting a connection to the other portable terminal, a camera line for sharing the camera module, and a sensor line for sharing various sensor modules. Also, the first interface units 170, 270 and the second interface units 180, 280 may further include an IDentification (ID) line for identifying a portable terminal connected thereto. This will be described in more detail further below.

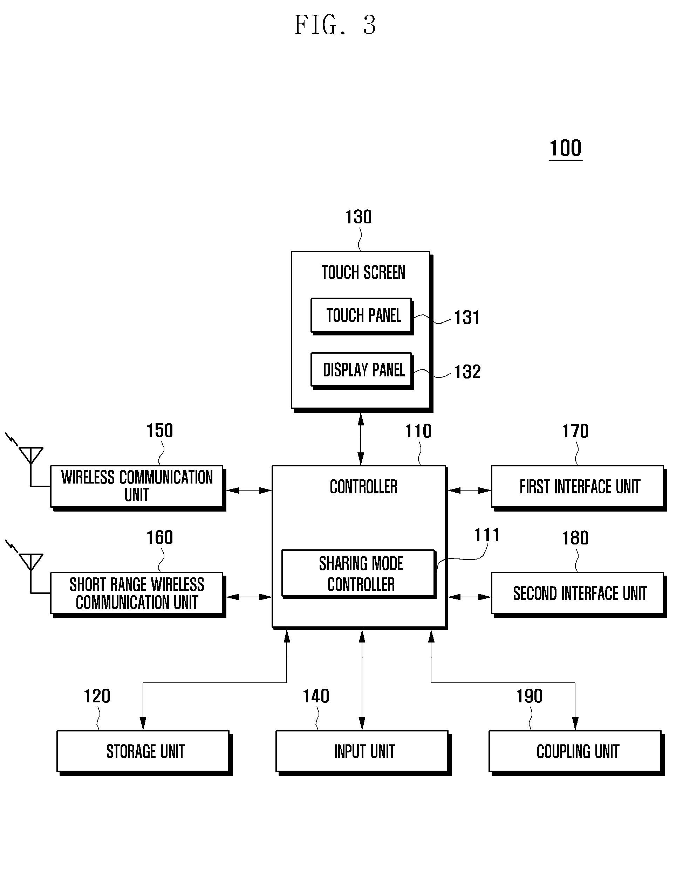

FIG. 3 is a schematic view illustrating a configuration of a portable terminal according to an exemplary embodiment of the present invention. Hereinafter, a description will be made with respect to the first portable terminal 100 as an example. However, the first portable terminal 100 and the second portable terminal 200 may have a similar configuration.

Referring to FIGs. 1 through 3, the first portable terminal 100 according to an exemplary embodiment of the present invention may include a first interface unit 170, a second interface unit 180, a coupling unit 190, a short range wireless communication unit 160, a wireless communication unit 150, an input unit 140, a touch screen 130, a storage unit 120 and a controller 110. The touch screen 130 may include a display panel 131 and a touch panel 132 and the controller 110 may include a sharing mode controller 111.

The wireless communication unit 150 may form a communication channel for a call, including a voice call and a video call, with a base station and a data communication channel for data transmission. To this end, the wireless communication unit 150 may include a radio frequency transmitting unit (not shown) for performing frequency up conversion and amplification of a signal to be transmitted, a radio frequency receiving unit (not shown) for performing low noise amplification and frequency down conversion of a received signal, and a transmission reception separation unit (not shown) for separating the received signal and the signal to be transmitted. Meanwhile, when the first portable terminal 100 does not provide a wireless communication function, the wireless communication unit 150 may be omitted.

The input unit 140 may include an input key and function keys that are used to receive numeral or character information, set various functions, and control a function of the first portable terminal 100. More particularly, the input unit 140 according to the present exemplary embodiment may transmit various controls signals (e.g., a video reproducing request signal, a game play signal) received in the sharing mode to the controller 110. The input unit 140 may be formed as one or a combination of input means such as a button type key pad, a ball joystick, an optical joystick, a wheel key, a touch key, a touch pad, or the touch screen 130.

The touch screen 130 may perform an input function and an output function. To this end, the touch screen 130 may include the display panel 131 for performing the output function and the touch panel 132 for performing the input function.

The display panel 131 displays various menus as well as information received from the user or information provided to the user. In other words, the display unit 131 can provide various screens according to use of the first portable terminal 100 such as, for example, a standby screen (a home screen), a menu screen, a message writing screen, a call screen, a calendar screen, or a phonebook screen. More particularly, the display unit 131 according to the present exemplary embodiment may output a video reproducing screen corresponding to a first divided video data when reproducing a video in the sharing mode. Alternatively, the display panel 131 may output a manipulation screen including at least one key in the sharing mode. For example, the display panel 131 may output a game manipulation screen for manipulating a game when executing the game and output a virtual keyboard manipulation output screen for writing a document when executing a document writing mode. Also, the display panel 131 may output a game screen according to game manipulation when executing the game in the sharing mode and output a document writing screen when executing the document writing mode. The display panel 131 may be formed in, for example, a Liquid Crystal Display (LCD) or an Organic Light Emitting Diode (OLED).

The touch panel 132 is mounted on top of the touch panel 131 and may generate a touch event according to a touch by a touch input device such as, for example, a user's finger or a stylus and transmit the generated touch event to the controller 110. The touch panel 132 may recognize a touch based on a change in a physical quantity, for example, a capacitance or a resistance, according to the touch by the touch input device and may transmit a type of the touch such as, for example, a tap, a drag, a flick, a double touch, a long touch, or a multi touch, and location information of the touch to the controller 110. The touch panel 132 is well known to those skilled in the art, and thus a detailed description thereof will be omitted.

The first interface unit 170 is an interface unit for connecting with the second portable terminal 200 and may be positioned inside the first portable terminal 100 in a normal state and may be exposed when connected with the second portable terminal 200. To this end, the first interface unit 170 may be formed in a FPCB. The first interface unit 170 may include the data line for transmitting the image data and the battery line for sharing the battery. The data line may be formed according to a specification of High-Definition Multimedia Interface (HDMI), Mobile Industry Processor Interface (MIPI), Universal Serial Bus (USB), or Inter Integrated Circuit (I2C). Also, the first interface unit 170 may further include the camera line for sharing the camera module or the sensor line for sharing various sensor modules. Also, the first interface unit 170 may further include the ID line for identifying a connected portable terminal. To this end, the first portable terminal 100 according to the present exemplary embodiment may store ID information of other portable terminals. The ID information may be set by the user or by using a phone number, International Mobile Equipment Identity (IMEI), or Electronic Serial Number (ESN) of each portable terminal. When the ID line is provided, the present exemplary embodiment may recognize the ID information of the connected portable terminal and differentiate a function provided in the sharing mode or limit a type of a component to be shared according to the recognized ID information.

The second interface unit 180 has a structure corresponding to the first interface unit 170. In other words, the second interface unit 180 may be used when the other portable terminal is connected to the first portable terminal 100. For example, the second interface unit 180 of the first portable terminal 100 may be connected to the first interface unit 270 of the second portable terminal 200.

The short range wireless communication unit 160 is an apparatus for providing a short range wireless communication function between portable terminals that are separated by a relatively short distance. More particularly, the short range wireless communication unit 160 may transmit an image data to the connected second portable terminal 200 in the sharing mode. Thus, when the sharing mode is provided through a short range wireless communication, the user may perform the sharing mode through a menu or a shortcut key after forming a short range wireless communication channel. The short range wireless communication unit 160 is preferably formed by Bluetooth, Zigbee, or Wi-Fi Direct in which at least video data can be transmitted at a high speed without delay. Meanwhile, when the first portable terminal 100 provides only the sharing mode through a wired connection, the short range wireless communication unit 160 may be omitted.

The coupling unit 190 is an apparatus for fixing the first portable terminal 100 and the second portable terminal 200. The coupling unit 190 may be configured as a male-female pair. Namely, the user may couple the first portable terminal 100 to the second portable terminal 200 by inserting a male coupling unit of the first portable terminal 100 into a female coupling unit of the second portable terminal 200. Alternatively, the user may couple the first portable terminal 100 to the second portable terminal 200 by inserting a male coupling unit of the second portable terminal 200 into a female coupling unit of the first portable terminal 100.

The coupling unit 190 may have various structures. For example, the coupling unit 190 may have a groove and a protrusion. Here, the protrusion may be positioned within the portable terminal 100, 200 and may be exposed to a user for coupling. Alternatively, the coupling unit may be formed as a slidable flat bar on a rear surface (opposite to the display unit) of the portable terminal 100, 200 and a groove to which the flat bar can be inserted. Here, the user may remove the flat bar from the first portable terminal 100 and slidably move the flat bar of the second portable terminal 200 such that a portion of the flat bar of the second portable terminal 200 is inserted into the groove of the first portable terminal 100 to which the flat bar can be inserted, thereby coupling the first portable terminal 100 and the second portable terminal 200. Meanwhile, structures of the coupling unit 190 described above are only an example and the present invention is not limited thereto.

The storage unit 120 may include an Operating System (OS) of the first portable terminal 100 and an application program for other optional functions such as, for example, a sound reproducing function, an image or video reproducing function, or a broadcast reproducing function as well as a user data and a data transmitted or received during communication. For example, the storage unit 120 may store a key map or a menu map for operating the touch screen 130. Here, the key map and the menu map may have various forms. For example, the key map can be a keyboard map, a 3*4 key map, a QWERTY key map, or a control key map for controlling an operation of an application program that is currently activated. Also, the menu map can be a menu map for controlling the operation of an application program being activated. Also, the storage unit 120 may store a video file, a game file, a music file, or a movie file. More particularly, the storage unit 120 may store a sharing mode application program for controlling the sharing mode in which the first portable terminal 100 and the second portable terminal are connected to each other. The sharing mode application program according to the present exemplary embodiments may include, for example, a routine for dividing a first video data to be displayed on the touch screen 130 of the first portable terminal 100 and a second video data to be displayed on the touch screen 230 of the second portable terminal 200, a routine for controlling to display the game manipulation screen for manipulating a game on the touch screen 130 of the first portable terminal 100 when executing the game and to display a game execution screen on the touch screen 230 of the second portable terminal 200, and a routine for controlling to display the virtual keyboard screen for entering a character on the touch screen 130 of the first portable terminal 100 when executing the document writing mode and to display a document screen on the touch screen 230 of the first portable terminal 200. Also, the sharing mode application program may include a routine for controlling to enable the camera module (not shown) and various sensor modules to be shared and used.

The control unit 110 may control an overall operation of the first portable terminal 100, control a signal flow between internal blocks of the first portable terminal 100, and perform data processing. More particularly, the control unit 110 according to the present exemplary embodiment may activate the sharing mode when a connection to the second portable terminal 200 is detected. To this end, the controller 110 may include a detection means (for example, an interrupt terminal) for detecting a connection to the second portable terminal 200. When the sharing mode is activated, the controller 110 may be a main controller.

The controller 110 may include a sharing mode controller 111. The sharing mode controller 111 may be activated when the first portable terminal 100 is connected to the second portable terminal 200 and may be inactivated when a connection is cancelled. In the sharing mode, when reproduction of video is requested, the sharing mode controller 111 may divide video data into two and output first video data to the touch screen 130 and transmit second video image data to the second portable terminal 200. Meanwhile, the sharing mode controller 111 may output the manipulation screen including at least one key to the touch screen 130 when executing the sharing mode and transmit a screen controlled by key manipulation to the second portable terminal 200. For example, when playing of a game is requested, the sharing mode controller 111 may output the manipulation screen including various manipulation keys for playing the game to the touch screen 130 and transmit a game execution screen to the second portable terminal 200.

Also, the sharing mode controller 111 may control the battery (not shown) to be shared. In other words, the sharing mode controller 111 may control such that a battery charge of a portable terminal having greater battery charge is provided to the other portable terminal. Meanwhile, when a battery charge of the first portable terminal 100 is below a first reference value, the sharing mode controller 111 may control to request the second portable terminal 200 to share the battery. Similarly, the second portable terminal 200 may request the first portable terminal 100 to share the battery when a battery charge thereof is below the first reference value.

When a battery sharing request is received from the second portable terminal 200, the sharing mode controller 111 may determine whether a battery charge thereof is equal to or greater than a second reference value and control to share the battery with the second portable terminal 200 when the battery charge is equal to or greater than the second reference value. The same applies to the second portable terminal 200.

Meanwhile, it is described above that the touch screen and the battery are shared, as an example. However, the present invention is not limited thereto. For example, according to an exemplary embodiment of the present invention, the camera module or the sensor module such as an acceleration sensor, a geomagnetic sensor or a motion sensor, may be shared.

Also, although not shown in FIG. 3, the first portable terminal 100 may selectively further include elements having additional functions such as, for example, a Global Positioning System (GPS) module for receiving location information, a broadcast module for receiving a broadcast, a digital sound reproducing module such as an MP3 module, and an internet communication module for providing an internet function. The elements may vary according to a convergence trend of a digital device, and thus, not all elements are listed; however, a structural element equivalent to a level of the foregoing element may be further included in the first portable terminal 100 according to an exemplary embodiment of the present invention.

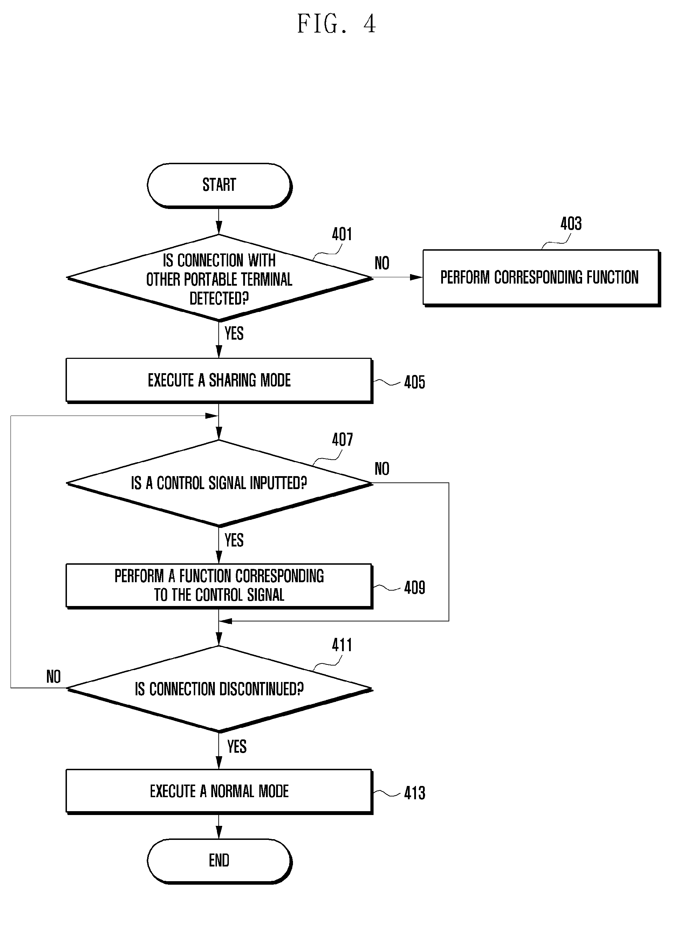

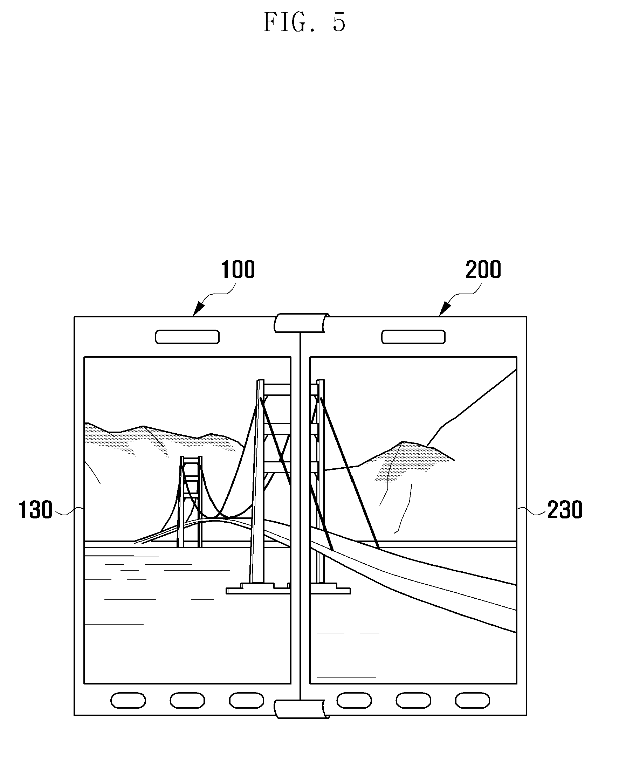

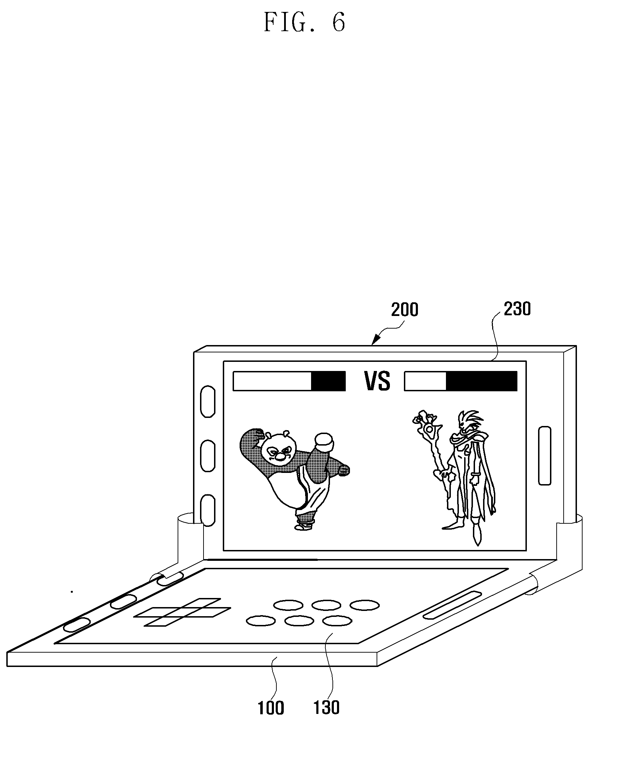

FIG. 4 is a flowchart illustrating a method of enlarging a display of a portable terminal according to an exemplary embodiment of the present invention, FIG. 5 is a view illustrating an example of reproducing a video by enlarging a display according to an exemplary embodiment of the present invention, FIG. 6 is a view illustrating an example of playing a game by enlarging a display according to an exemplary embodiment of the present invention.

Referring to FIGs. 1 through 6, the controller 110 of the first portable terminal 100 according to an exemplary embodiment of the present invention may detect connection with the second portable terminal 200 in step 401. As described in FIG. 1, the first portable terminal 100 and the second portable terminal 200 may be connected with each other through a wired cable (e.g., FPCB). For detecting such connection, the first portable terminal 100 may include a detection means. The detection means may be an interrupt terminal. A method of detecting connection to an external device by using the interrupt terminal is well known to those skilled in the art, and therefore, a detailed description thereof will be omitted. Meanwhile, the user may fix the second portable terminal 200 by using the coupling unit 190 of the first portable terminal 100. Alternatively, the user may fix the first portable terminal 100 and the second portable terminal 200 in a desired form (in a straight line or bent at a predetermined angle) by using the clip 310, 320.

When the connection with the second portable terminal 200 is not detected, the controller 110 of the first portable terminal 100 may perform a corresponding function in step 403. For example, the controller 110 of the first portable terminal 100 may perform a music producing function, a broadcast receiving function, or a video reproducing function according to a user's request, or maintain a standby state.

To the contrary, when the detection with the second portable terminal 200 is detected, the controller 110 of the first portable terminal 100 may perform the sharing mode in step 405. The sharing mode is a mode in which a portion of a component is shared with the connected second portable terminal 200. For example, the sharing mode is a mode in which a plurality of display devices are shared to be used. When executing the sharing mode, the controller 110 of the first portable terminal 100 may be a main controller and a controller 210 of the second portable terminal 200 may be a secondary controller. Also, when executing the sharing mode, the first portable terminal 100 and the second portable terminal 200 may share the battery. The purpose of this is to prevent a battery of the first portable terminal 100 or the second portable terminal 200 from dying such that the touch screen may not be shared. To this end, a battery of the first portable terminal 100 and a battery of the second portable terminal 200 may be connected through the wired cable (e.g., FPCB).

The controller 110 of the first portable terminal 100 may determine whether a control signal is inputted in step 407. When the control signal is not received, the controller 110 of the first portable terminal 100 may proceed to step 411, which will be described further below. To the contrary, if the control signal is received, the controller 110 of the first portable terminal 100 may perform a function according to the control signal in step 409. To this end, the first portable terminal 100 may include the sharing mode controller 111. For example, when a video reproducing signal is inputted when the sharing mode is executed, the sharing mode controller 111 of the first portable terminal 100 may output a video to two connected touch screens, as shown in FIG. 5. To this end, the sharing mode controller 111 of the first portable terminal 100 may divide a video data into two, transmit a first video data to the touch screen 130 of the first portable terminal 100 and transmit a second video data to the second portable terminal 200 such that the second video data is outputted to the touch screen 230 of the second portable terminal 200. Alternatively, as shown in FIG. 6, when a game is executed when the sharing mode is executed, the sharing mode controller 111 of the first portable terminal 100 may output the game manipulation screen including a plurality of manipulation keys for controlling the game to the touch screen 130 of the first portable terminal 100 and output a game screen to the touch screen 230 of the second portable terminal 200. Also, although not shown in the drawings, in the document writing mode, the sharing mode controller 111 may output the virtual keypad screen to the touch screen 130 of the first portable terminal 100 and output the document writing screen to the touch screen 230 to the second portable terminal 200.

The controller 110 of the first portable terminal 100 may determine whether the connection is discontinued in step 411. When the connection is maintained, the controller 110 of the first portable terminal 100 may return to step 407 to repeat the above described process. On the other hand, when the connection is discontinued, the controller 110 of the first portable terminal 100 may terminate the sharing mode in step 413 and operate in a normal mode.

Meanwhile, it is described above that a display device is shared, as an example. However, the present invention is not limited thereto. In other words, according to an exemplary embodiment of the present invention, a portion of a component that is respectively included in the portable terminal and the other portable terminal that performs the same function may be shared. Here, the portion of the component may have the same or a similar specification. Here, an exemplary embodiment of the present invention may enable sharing the camera module. In this case, the present exemplary embodiment may capture a 3-dimensional video by using dual cameras or capture an image or video having a high resolution through the dual cameras. Here, the present exemplary embodiment may preferably remove a repetitive image among images inputted from each camera. Also, the present exemplary embodiment may provide more accurate sensor data by sharing the acceleration sensor, the geomagnetic sensor or the motion sensor. For example, when the first portable terminal 100 and the second portable terminal 200 have a three axis acceleration sensor, the present exemplary embodiment may provide accurate data in the sharing mode with a similar effect of having a six axis acceleration sensor.

Also, it is described above that the portable terminals are connected in a wired manner. However, the present invention is not limited thereto. For example, an exemplary embodiment of the present invention may use Bluetooth, Zigbee, or Wi-Fi Direct for a short range wireless communication which enables a high speed data transmission. When the first portable terminal 100 and the second portable terminal 200 are connected to each other using the short range communication as described above, the controller 110 determines whether executing the sharing mode is requested, and when the executing the sharing mode is requested, the sharing mode may be entered. Executing the sharing mode may be requested through a predefined menu or a shortcut key.

Further, an example of enlarging the display by connecting two portable terminals is described above. However, it should be appreciated to those skilled in the art that the present exemplary embodiment may apply to two or more portable terminals that are connected to one another.

The foregoing method for sharing a component of a portable terminal of the present exemplary embodiment may be implemented in an executable program command form by various computer means and be recorded in a non-transitory computer readable recording medium. In this case, the computer readable recording medium may include a program command, a data file, and a data structure individually or a combination thereof. In the meantime, the program command recorded in a recording medium may be specially designed or configured for any of the exemplary embodiments of the present invention or be known to a person having ordinary skill in a computer software field to be used.

The non-transitory computer readable recording medium includes Magnetic Media such as hard disk, floppy disk, or magnetic tape, Optical Media such as Compact Disc Read Only Memory (CD-ROM) or Digital Versatile Disc (DVD), MagnetoOptical Media such as floptical disk, and a hardware device such as ROM. RAM, flash memory storing and executing program commands. Further, the program command includes a machine language code created by a complier and a high-level language code executable by a computer using an interpreter. The foregoing hardware device may be configured to be operated as at least one software module to perform an operation of any of the exemplary embodiments of the present invention.

As described above, in a portable terminal and a method of sharing a component thereof according to an exemplary embodiment of the present invention, a portion of a component (e.g., the display, the battery, the camera module, the sensor module) that has a similar form factor may be shared. For example, in the present exemplary embodiment, a display device may be shared to operate a plurality of display devices as one display device such that inconvenience caused by a limited screen size of the portable terminal may be obviated. Also, when operating the plurality of display devices as one display device, various screen management is possible such that the same screen is displayed in each display device, or one enlarged screen is displayed in the connected display devices, or different screens are displayed in each display device. For example, in the present exemplary embodiment, a video may be reproduced on a larger screen by sharing respective display devices of portable terminals, or in case of executing a game, a game screen may be displayed in one screen while a game manipulation screen may be outputted to the other display, or in case of writing a document, an input screen including a virtual keypad may be outputted to one display while a document writing screen may be outputted to in other display. In this manner, the present invention may improve user convenience. Also, by sharing the battery, the present invention may prevent a battery of one of connected portable terminals from dying first.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A portable terminal (100) comprising:
an interface unit (170,180,270,280) configured to connect with another portable terminal; and
a controller configured to activate a sharing mode in which at least a portion of a component is shared with the other portable terminal (200) when connected with the other portable terminal (200) through the interface unit (170,180,270,280).

2. The portable terminal of claim 1, wherein the component comprises a device included in the portable terminal (100) and the other portable terminal (200), respectively, which performs an identical function.

3. The portable terminal of claim 1 or 2, wherein the interface unit (170,180,270,280) comprises:
at least one of a data line for transmitting image data, a battery line for sharing a battery, a camera line for sharing a camera module, a sensor line for sharing a sensor module, and a detection line for detecting a connection with the other portable terminal.

4. The portable terminal of any of the previous claims, wherein, when reproduction of video is requested in the sharing mode, the controller divides video data to output first video data to a screen of the portable terminal and transmits second video data to the other portable terminal to be output to a screen of the other portable terminal.

5. The portable terminal of any of the previous claims, wherein, in the sharing mode, the controller outputs a manipulation screen including at least one key to a screen of the portable terminal and transmits a screen controlled by manipulation of the at least one key to the other portable terminal to be output to a screen of the other portable terminal.

6. The portable terminal of any of the previous claims, further comprising:
a coupling unit (190) for coupling with the other portable terminal.

7. The portable terminal of any of the previous claims, further comprising:
a clip (310,320) for fixing the portable terminal (100) and the other portable terminal (200), wherein the clip includes one of a straight clip and a bent clip that is bent at a predetermined angle.

8. The portable terminal of any of the previous claims, wherein the portable terminal (100) and the other portable terminal (200) further comprise a short range wireless communication unit (160) that enables data communication, wherein the portable terminal (100) and the other portable terminal (200) are connected to each other through the short range wireless communication unit to share the at least a portion of the component.

9. A method of sharing a component of a portable terminal, the method comprising:
detecting, by the portable terminal (100), a connection with another portable terminal (200); and
activating a sharing mode in which at least a portion of a component is shared with the other portable terminal when connection with the other portable terminal is detected.

10. The method of claim 9, wherein the component comprises a device included in the portable terminal and the other portable terminal, respectively, which performs an identical function.

11. The method of claim 9 or 10, further comprising:
dividing, by the portable terminal (100), video data into first video data and second video data when reproduction of video is requested in the sharing mode;
outputting, by the portable terminal (100), the first video data; and
transmitting, by the portable terminal (100), the second video data to the other portable terminal (200) that is connected thereto,
wherein the other portable terminal (100) outputs the second video data.

12. The method of any of the claims 9 - 11, further comprising:
outputting, by the portable terminal (100), a manipulation screen including at least one key in the sharing mode,
wherein the other portable terminal (200) outputs a screen controlled by the at least one key.

13. The method of any of the claims 9 - 12, further comprising:
requesting, when the portable terminal (100) has a battery charge below a first reference value, the other portable terminal to share a battery.

14. The method of any of the claims 9 -13, further comprising:
receiving a battery sharing request from the other portable terminal; and
sharing, by the portable terminal when a battery charge thereof is equal to or greater than a second reference value, a battery with the other portable terminal.

15. A method of sharing a component of a portable terminal, the method comprising:
connecting the portable terminal (100) with another portable terminal (200) through a short range wireless communication;
determining whether execution of a sharing mode in which the portable terminal (100) and the other portable terminal (200) share at least a portion of a component is requested; and
executing the sharing mode when the execution of the sharing mode is requested.
